Europäisches Patentamt

European Patent Office

Office européen des brevets

(11) Publication number: **0 165 641**
**B1**

# EUROPEAN PATENT SPECIFICATION

(45) Date of publication of patent specification: **28.09.88**

(51) Int. Cl.⁴: **F 16 D 65/56, B 61 H 15/00**

(21) Application number: **85200942.2**

(22) Date of filing: **14.06.85**

(54) **A brake cylinder apparatus with a slack adjuster mechanism especially for railroad vehicles.**

(30) Priority: **22.06.84 FR 8409888**

(43) Date of publication of application:
**27.12.85 Bulletin 85/52**

(45) Publication of the grant of the patent:
**28.09.88 Bulletin 88/39**

(84) Designated Contracting States:
**DE FR GB IT**

(56) References cited:
**DE-B-2 830 361**
**FR-A-2 276 204**
**FR-A-2 500 897**
**US-A-3 744 596**
**US-A-4 036 332**
**US-A-4 138 002**

(73) Proprietor: **SAB NIFE AB**
**Box 515**
**S-261 24 Landskrona (SE)**

(72) Inventor: **Pouteau, Philippe**
**9, Résidence Estienne d'Orves**
**F-91120 Palaiseau (FR)**

(74) Representative: **Petri, Stellan et al**
**c/o SAB NIFE AB Box 515**
**S-261 24 Landskrona (SE)**

Courier Press, Leamington Spa, England.

## Description

### Technical field

This invention relates to a brake cylinder apparatus with a single-acting or double-acting slack adjuster mechanism, applicable particularly but not exclusively to railroad vehicles, comprising a cylinder, a piston within the cylinder, non-rotatable adjusting rod, an adjusting nut, rotatable on the rod, and a storage spring.

### Background of the invention

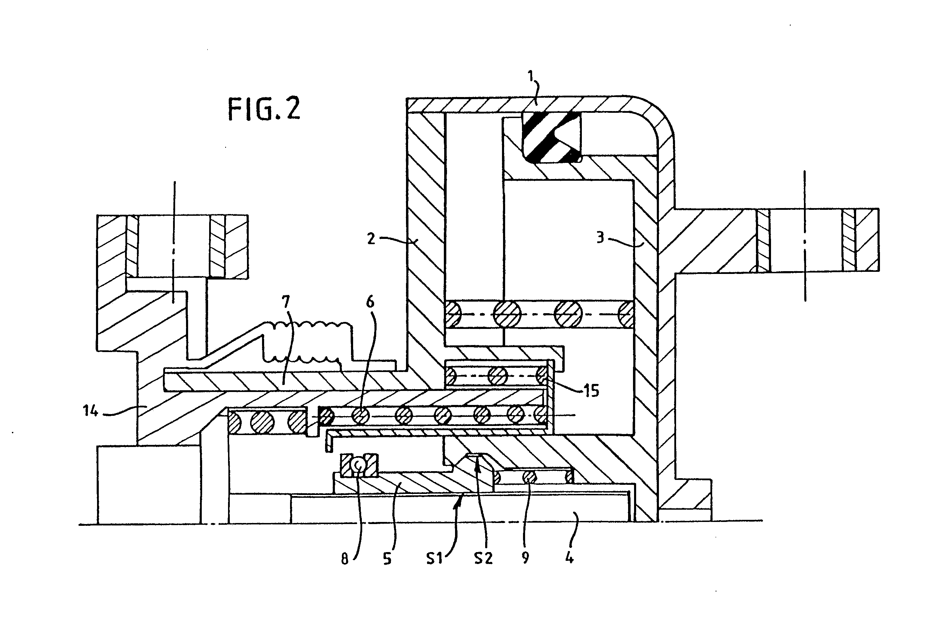

Through for example DE—A—2 830 361 (-Figure 2) an apparatus is known, comprising a rotary rod, an adjusting nut, a ball abutment (for single-acting operation) or two ball abutments (for double-acting operation), a storage spring, and a guiding tube for guiding the movable section.

Such an apparatus fulfils two functions, i.e. the function of adjusting the length of the apparatus or the function of adjusting by screwing or unscrewing said rod within said nut and the function of enabling length adjustment through rotational release of the nut in an intermediary position relative to both clutches which hold the nut.

It must be noted that the total length of the apparatus corresponds to the adjusting and guiding length for the translationally movable section providing the compensation in addition to the length of the adjuster mechanism and possibly a piston stroke.

In other words the adjuster mechanism is located after the guiding of the movable section. This is disadvantageous in as far as the apparatus must be as little cumbersome as possible; for of such apparatuses are for example needed for the four discs of an axle.

### The invention

This invention remedies such disadvantage and it provides a short apparatus resulting from the facts that the nut is situated within the storage spring and that two functional surfaces on the nut one, performing the adjustment function by thread engagement with the rod, and one, performing the function of allowing the adjustment by clutch engagement, are radially superposed.

In view in particular of the concentric arrangement the apparatus length corresponds only to the adjusting and guiding length in addition to the piston stroke.

Moreover, the adjustability increased by the length of the nut and possibly the manual rescrewing device is only comprised within such length.

The apparatus according to this invention in its double-bearing embodiment uses a single ball abutment with a cup or ball bearing and a compression spring.

In its single-acting embodiment the apparatus according to the invention uses a ball abutment without any cup and without any compression spring but with a retaining spring.

In this case, a rotary head is provided for manual rotation.

In another embodiment, which is double-acting in operation and single-acting at rest, the apparatus according to the invention comprises a cup type abutment preventing declutching between the nut and a sleeve (locking of the adjuster device at rest) and permitting the adjuster mechanism to be unlocked at braking.

Also in this case, there is provided a screwing and unscrewing head for the adjuster mechanism.

### Brief description of the drawings

The invention will be described in further detail below, reference being made to the attached drawings, in which Fig. 1 shows a brake cylinder apparatus with a double-acting slack adjuster mechanism according to the invention in longitudinal, partly cross-sectional view of one half thereof, Fig. 2 in the same manner shows a single-acting embodiment of such a slack adjuster mechanism, and Fig. 3 also in the same manner shows an embodiment of such a slack adjuster mechanism, which is double-acting in operation and single-acting at rest.

### Detailed description of preferred embodiments

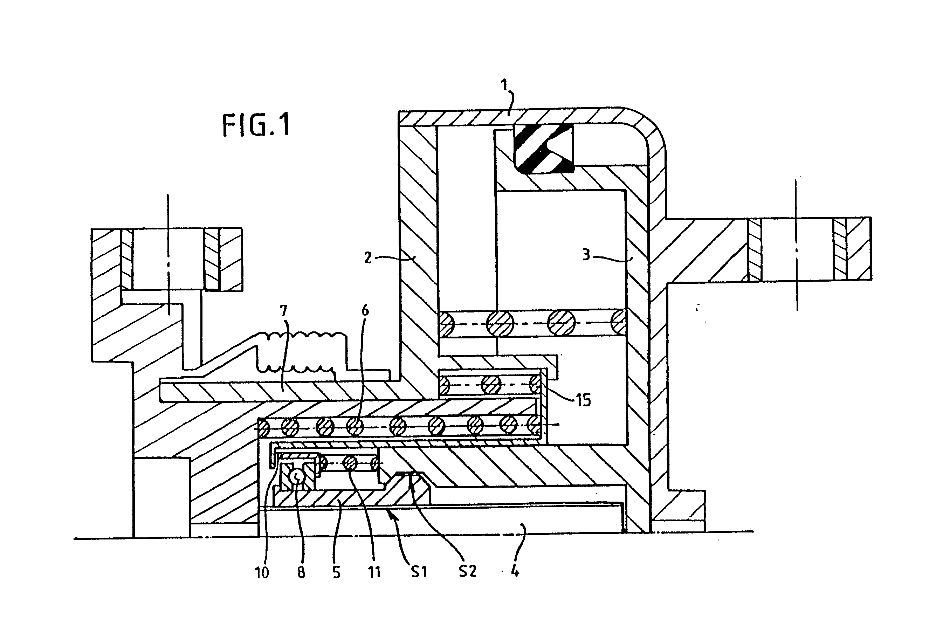

In the embodiment shown in Fig. 1 a brake cylinder apparatus and slack adjuster mechanism according to the invention are combined in a short apparatus comprising, apart from a cylinder 1 with its lid 2 and a piston 3 within the cylinder, a concentric arrangement of elements from the center and outwards.

The concentric arrangement from the center and outwards comprises a short non-rotary threaded adjusting rod 4, an adjusting nut 5, a storage spring 6, a guiding tube 7, and a compression spring 15.

The concentric arrangement from the center and outwards comprises a short non-rotary threaded adjusting rod 4, an adjusting nut 5, a storage spring 6, a guiding tube 7, and a compression spring 15.

The nut 5 fulfils both the adjusting function by adjusting the length of the apparatus in its central portion and the function of permitting the apparatus to be length adjusted at its concentric part. The contacting surfaces S1 and S2 providing both functions are therefore superposed in diameter instead of being disposed longitudinally as in known apparatuses.

The compression spring 15 permits to retain the nut 5 when there is no effective development of the braking force. It is compressed during the elastic travel.

It must be noted that the nut 5 according to the invention replaces the rotary adjusting rod and the adjuster nut of such known devices in which screwing or unscrewing of said rotary adjusting rod within said adjuster nut causes the apparatus to become shorter or longer. Mojeover, the rotary nut 5 of the invention, which is the only rotary part in the apparatus, makes it unnecessary to provide a bearing as required by a rotary rod. Since there is no bearing the length of the apparatus is smaller.

By the single nut concept this invention also ensures a simpler guiding of the piston 3, reduces friction and facilitates taking up slack.

Generally, the apparatus according to the invention is simpler and its realization implies less expenses while being more reliable.

In its single-acting embodiment and apparatus according to the invention comprises a ball abutment 8 and a retaining spring 9 (Fig. 2).

In its double-acting embodiment the apparatus according to the invention comprises a single ball abutment 8 with a cup 10 for a ball bearing (not shown) and a spring 11 (Fig. 1).

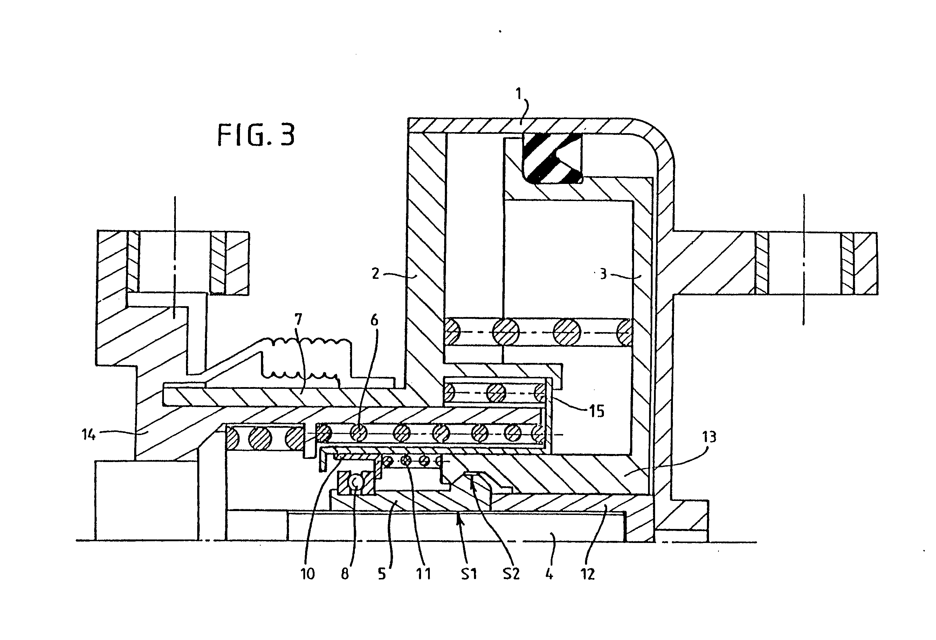

In its embodiment which is double-acting in operation and single-acting at rest the apparatus according to the invention comprises a cuplike abutment 12 preventing declutching between the nut 5 and the sleeve 13, which corresponds to the locking of the adjuster mechanism at rest and the unlocking of the adjuster mechanism at braking (Fig. 3).

Both in the single-acting and the embodiment which is double-acting in operation and single-acting at rest the apparatus according to the invention comprises a single-acting at rest the apparatus according to the invention comprises a rotary head 14 for screwing and unscrewing the adjuster mechanism.

The operation of the described and shown apparatus is apparent for a person skilled in the art. It is similar to that to that disclosed for example in the US Patents Nos. 3 744 596, 4 036 332, and 4 138 002.

Finally, it is to be understood that this invention has only been described and shown by way of preferred examples and that equivalent parts can be substituted for its constituents without departing from the scope of the invention.

### Claim

A brake cylinder apparatus with a single-acting or double-acting slack adjuster mechanism, applicable particularly but not exclusively to railroad vehicles, comprising a cylinder (1), a piston (3) with the cylinder, a non-rotatable adjusting rod (4), an adjusting nut (5), rotatable on the rod, and a storage spring (6), characterized in that the nut (5) is situated within the storage spring (6) and in that two functional surfaces (S1, S2) on the nut (5), one (S1), performing the adjustment function by thread engagement with the rod (4), and one (S2), performing the function of allowing the adjustment by clutch engagement, are radially superposed.

### Patentanspruch

Bremszylindervorrichtung mit einem einfach oder doppelt wirkenden Gestängestellermechanismus zur Verwendung, insbesondere, jedoch nicht ausschließlich bei Schienenfahrzeugen mit einem Zylinder (1), einem Kolben (3) im Zylinder, einer nicht drehbaren Stellstange (4), einer Stellmutter (5), die auf der Stange drehbar ist, und einer Speicherfeder (6), dadurch gekennzeichnet, daß die Mutter (5) innerhalb der Speicherfeder (6) angeordnet ist und daß zwei Funktionsflächen (S1, S2) an der Mutter (5) radial übereinander angeordnet sind, von denen die eine (S1) die Einstellfunktion durch eine Schraubineingriffnahme mit der Stange (4) erfüllt, während die andere (S2) die Funktion hat, die Einstellung durch Kupplungsineingriffnahme zur ermöglichen.

### Revendication

Appareil à cylindre de frein comportant un mécanisme régleur à simple effet ou à double effet, pouvant être appliqué en particulier, mais non exclusivement, à des véhicules ferroviaires, comprenant un cylindre (1), un piston (3) à l'intérieur du cylindre, une tige non rotative (4) de réglage, un écrou (5) de réglage pouvant tourner sur la tige, et un ressort accumulateur (6), caractérisé en ce que l'écrou (5) est situé à l'intérieur du ressort accumulateur (6) et en ce que deux surfaces fonctionnelles (S1, S2) de l'écrou (5), l'une (S1) assumant la fonction de régalge par prise vissée avec la tige (4), et l'autre (S2) assumant la fonction d'autorisation du réglage par prise par accouplement, sont superposées radialement.

FIG.1

FIG.2

FIG.3